Europäisches Patentamt

(19) European Patent Office

Office européen des brevets

(11) Publication number: **0 063 475**
**B1**

(12) **EUROPEAN PATENT SPECIFICATION**

(45) Date of publication of patent specification: **30.07.86**

(21) Application number: **82301943.5**

(22) Date of filing: **15.04.82**

(51) Int. Cl.⁴: **C 09 J 3/16, C 08 G 59/18**

(54) **Microencapsulated epoxy adhesive system.**

(30) Priority: **21.04.81 US 256219**

(43) Date of publication of application:
**27.10.82 Bulletin 82/43**

(45) Publication of the grant of the patent:
**30.07.86 Bulletin 86/31**

(84) Designated Contracting States:
**DE FR GB SE**

(56) References cited:
**FR-A-1 415 039**
**GB-A-1 265 489**
**US-A-3 395 105**
**US-A-3 839 220**
**US-A-4 098 736**

**CHEMICAL ABSTRACTS, vol. 80, no. 20, 20th
May 1974, page 34, no. 109317m, Columbus
Ohio (USA);**

(73) Proprietor: **CAPSULATED SYSTEMS, INC.**
**P.O. Box 1351**
**Fairborn Ohio 45324 (US)**

(72) Inventor: **Hart, Ronald L.**
**1650 E.Slater Court**
**Xenia Ohio 45385 (US)**
Inventor: **Work, Dale E.**
**115 N. Madison Road**
**London Ohio 43140 (US)**
Inventor: **Davis, Colin E.**
**1005 Edgebrook Avenue**
**New Carlisle Ohio 45344 (US)**

(74) Representative: **Warren, Anthony Robert et al
BARON & WARREN 18 South End Kensington
London W8 5BU (GB)**

EP 0 063 475 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to an encapsulated epoxy adhesive system and, more particularly, to a water based adhesive system employing a hydrophobic curing agent.

Most common epoxy adhesives are prepared from a two-part system comprising an epoxy resin and a curing agent. Prior to application, the two parts are mixed and the resin and curing agent mixture are applied to the bonding site where the resin is cured into a hard adherent mass. The common two-part adhesive system is inconvenient to work with because the two parts must be mixed and the adhesive cannot be applied directly to the bond site. One of the techniques that has been used to make the two part system more convenient has been to microencapsulate the epoxy resin and the curing agent. Encapsulated resin and curing agent do not react. Therefore, a mixture of the capsules can be formed and applied directly to a bonding site. There when the capsules are broken the resin and curing agent react and the epoxy resin bonds. Encapsulated adhesive systems such as this have been employed with threaded fasteners. The encapsulated resin and curing agent are applied to the fastener. As the fastener is tightened, the capsules break and the adhesive bond is formed.

Some of the problems which have been associated with prior epoxy adhesive systems have been that the curing agents used are relatively hygroscopic and have a short shelf life, and the systems have employed a polymeric vehicle. Capsules of curing agent produced by prior encapsulation techniques have been to some extent moisture permeable and the shelf life of the system has not been appreciably enhanced.

US—A—3839220 discloses an epoxy adhesive comprising an epoxy resin and a coacervate emulsion of a hydrophobic curing agent. GB—A—1265489 discloses an epoxy adhesive system prepared by diluting an ethylene-vinyl acetate copolymer latex with water and adding to the latex a tetraethylene pentamine curing agent and microcapsules containing an epoxy resin.

The present invention uses an encapsulated adhesive system employing a hydrophobic and therefore less hygroscopic curing agent.

The present invention consists in an aqueous based epoxy adhesive system comprising: coacervate of a water soluble polymer, a solution of a hydrophobic curing agent, and microcapsules containing an epoxy resin, said coacervate being a continuous phase in which said solution and said microcapsules are dispersed.

In accordance with the invention, the polymeric vehicle is replaced by water without sacrificing the adhesive qualities of a polymer based system.

The system of the present invention has the following advantages:

1. Much higher breakaway torques on 3/8'' (9.5 mm) bolts.

2. Much greater consistency and reproducibility.

3. Much less moisture sensitivity which means coated bolts may not have to be protected from the environment.

4. Much longer pot-life. This enables a 1-part ready-to-apply aqueous based epoxy adhesive.

In accordance with the present invention an encapsulated epoxy adhesive system is provided comprising epoxy resin capsules and an encapsulated hydrophobic curing agent. The curing agent is preferably Anacamine TL by Pacific Anchor Chemical Corp. Anacamine TL is a 45% solution of methylene dianiline in a non-volatile plasticizer.

The epoxy system of the present invention is prepared by forming epoxy resin capsules. These capsules can be formed using techniques which are well known in the art. One convenient method is to form a polyvinyl alcohol capsule wall via coacervation and graft onto it a urea-resorcinol-formaldehyde resin. Epon 828 by Shell Oil Co. is a suitable epoxy resin but those skilled in the art will recognize that other epoxy resins can be used. These capsules may range in size from 10 to 1000 μm and preferably 50 to 150 μm. Normally the epoxy content of the capsules is on the order of 86%. The capsules may be used as a free flowing powder although it is not necessary to isolate them.

The epoxy capsules are, in one embodiment of the invention, mixed with a coacervate emulsion of the curing agent. Using Anacamine TL as an example, this is accomplished by 1.) dispersing a 75% solution of Ancamine TL in xylene into a Gelvitol 20-90 PVA solution as 50—100 μm droplets, 2) at about 45°C coacervating the PVA and promoting encpasulation of the Ancamine TL by the sequential addition of solutions of gum arabic, resorcinol and sodium sulfate, 3) allowing the swollen walled capsules to settle overnight, and 4) decanting off the supernatant phase and gently agitating the coacervate phase with a spatula to produce a 1—20 μm "coacervate emulsion" of the Ancamine TL.

Thereafter the epoxy capsules are added to the emulsion together with sufficient binder solution to prepare a slurry with a viscosity suitable for hand application. One such formulation is shown below:

| | |
|---|---|
| Epoxy capsules | 4.0 parts |
| Coacervate emulsion | 4.0 parts |
| Binder solution | As required |

2

# 0 063 475

A suitable binder for the above formulation is a solution of 2.5% Elvanol PVA 71-30 and 0.5% Kelzans xanthum gum.

Another method of preparing the Ancamine TL coacervate emulsion is by preparing the PVA-resorcinol coacervate without the curing agent and decanting off the supernatant after settling overnight. Then the Ancamine TL curing agent is emulsified into the coacervate using the Waring Blendor and with or without the addition of some of the supernatant to adjust viscosity. The emulsion prepared by this method will be referred to as a "precoacervate emulsion".

In accordance with a preferred embodiment of the present invention, water is substituted for the xanthum gum/PVA binder solution in the coating formulation discussed above. It has been found that in some applications no viscosity builder or added binder is necessary. The PVA coacervate serves as the binder. In addition, by eliminating the xanthum gum which promotes bacterial growth, the problem caused by the limited shelf life of this component is eliminated. Initial testing indicates that the test results obtained through use of water as the diluent in the coating formulation are comparable to those obtained through use of the xanthum gum/PVA binder. Preparing this formulation, it is been found desirable to use less water in preparing the Ancamine TL coacervate emulsion. The result is a coacervate emulsion from which a supernatant phase need not be decanted, and which requires no additional water as a binder for the preparation of the coating formulation. The entire process can be carried out in much less time than that required by the original procedure, for example, a total manufacturing time of 2.5 hours. Initial test results are very encouraging. Settling of the coacervate-Ancamine TL complex does occur during storage, but is not expected to present any formulation or coating difficulties.

In comparison to a system containing a binder, it has been found that a simple water dilution provides good breakaway torques, but addition of a binder may provide better prevailing-off torques in some cases. This may be due to the binder system filling the bolt threads to a greater extent. The water—no binder system is more cost effective and production-oriented.

The adhesive system of the present invention is cured by breaking the microcapsules such that the resin and curing agent contact and react. Prior to curing and after application, the coating should be allowed to dry. If it does not, the breakaway torque is diminished and the results are not as reproducible. A typical drying condition is 15 minutes at 100°C. Excessive heating may volatize components necessary for an optimum cure that yield good breakaway torques, but a certain amount of drying is essential to eliminate excess moisture from the coating. A coating which is more thoroughly dried in a relatively rapid manner may provide more abrasive interference and, therefore, higher prevailing off torques. The effect of the drying conditions on one adhesive system is shown below.

| Prevailing off torque | Breakaway torque (inch-pounds) | Drying conditions |
|---|---|---|
| 67  (7.57 Nm) | 182 (20.56 Nm) | 5 min. at 100°C |
| 76  (8.59 Nm) | 151 (17.06 Nm) | 10 min. at 100°C |
| 97 (10.96 Nm) | 158 (17.85 Nm) | 15 min. at 100°C |
| 12  (1.36 Nm) | 103 (11.64 Nm) | 5 min. at  75°C |
| 26  (2.94 Nm) | 142 (16.04 Nm) | 10 min. at  75°C |
| 32  (3.62 Nm) | 173 (19.55 Nm) | 15 min. at  75°C |
| 79  (8.93 Nm) | 180 (20.34 Nm) | 20 min. at  75°C |
| 19  (2.15 Nm) | 178 (20.11 Nm) | 5 hours at ambient |

The effect of the epoxy capsule size on the torque is shown in the following table for a water diluent system.

| Prevailing off torque | Breakaway torque (inch-pounds) | Capsule size U (majority of capsules) |
|---|---|---|
| 74 (8.36 Nm) | 158 (17.85 Nm) | 50—150 |
| 61 (6.89 Nm) | 149 (16.83 Nm) | 50—150 |
| 61 (6.89 Nm) | 130 (14.69 Nm) | 100 |
| 47 (5.31 Nm) | 206 (23.27 Nm) | 125 |
| 86 (9.72 Nm) | 168 (18.98 Nm) | 53 |
| 59 (6.67 Nm) | 170 (19.21 Nm) | 50—150 |
| 51 (5.76 Nm) | 154 (17.40 Nm) | 150 |

The table below shows the effect of cure time on the torques for a water diluent—no binder system.

| Prevailing off torque (in-lb) | Breakaway torque (inch-pounds) | Cure time |
|---|---|---|
| 18 (2.03 Nm) | 55 (6.21 Nm) | 8 hrs. |
| 55 (6.21 Nm) | 180 (20.34 Nm) | 16 hrs. |
| 68 (7.68 Nm | 214 (24.18 Nm) | 24 hrs. |
| 65 (7.34 Nm) | 192 (21.69 Nm) | 48 hrs. |
| 106 (11.98 Nm) | 190 (21.47 Nm) | 72 hrs. |

**Claims**

1. An aqueous based epoxy adhesive system comprising: a coacervate of a water soluble polymer, a solution of a hydrophobic curing agent, and microcapsules containing an epoxy resin, said coacervate being a continuous phase in which said solution and said microcapsules are dispersed.

2. An aqueous based epoxy adhesive system according to claim 1, wherein said system additionally includes a binder.

3. An aqueous based epoxy adhesive system according to claim 1 or 2, wherein said hydrophobic curing agent is methylene dianiline.

4. An aqueous based epoxy adhesive system according to claim 2, or claim 2 in combination with claim 3, wherein said binder comprises polyvinyl alcohol and Xanthum gum.

5. An aqueous based epoxy adhesive system according to any preceding claim, wherein said microcapsules are 50 to 150 μm in size.

6. An aqueous based epoxy adhesive system according to any preceding claim, wherein said microcapsules are formed by interfacial polymerization of urea resorcinol formaldehyde resin.

7. A threaded fastener including a threaded surface which carries an epoxy adhesive system, said system comprising a coacervate of a water soluble polymer, a solution of a hydrophobic curing agent, and microcapsules containing an epoxy resin, said coacervate being a continuous phase in which said solution and said microcapsules are dispersed.

8. A threaded fastener according to claim 7, wherein said hydrophobic curing agent is methylene dianiline and said water soluble polymer is polyvinyl alcohol.

**Patentansprüche**

1. Wäßriges Epoxyklebersystem mit einem Koazervat eines wasserlöslichen Polymers, einer Lösung eines hydrophoben Härtungsmittels und ein Epoxyharz enthaltenden Mikrokapseln, wobei das Koazervat eine zusammenhängende Phase ist, in der die Lösung und die Mikrokapseln dispergiert sind.

2. Wäßriges Epoxyklebersystem nach Anspruch 1, worin dieses System zusätzlich ein Bindemittel enthält.

3. Wäßriges Epoxyklebersystem nach Anspruch 1 oder 2, worin das hydrophobe Härtungsmittel Methylendianilin ist.

4. Wäßriges Epoxyklebersystem nach Anspruch 2 oder nach Anspruch 2 in Verbindung mit Anspruch 3, worin das Bindemittel Polyvinyalkohol und Xanthum-Gummi enthält.

5. Wäßriges Epoxyklebersystem nach einem der vorausgehenden Ansprüche, worin die Mikrokapseln eine Größe von 50 bis 150 µm besitzen.

6. Wäßriges Epoxyklebersystem nach einem der vorausgehenden Ansprüche, worin die Mikrokapseln durch Grenzflächenpolymerisation von Harnstoff-Resorcin-Formaldehydharz gebildet sind.

7. Mit Gewinde versehene Befestigungseinrichtung mit einer mit Gewinde versehenen Oberfläche, die ein Epoxyklebersystem trägt, wobei dieses System ein Koazervat eines wasserlöslichen Polymers, eine Lösung eines hydrophoben Härtungsmittels und ein Epoxyharz enthaltende Mikrokapseln aufweist, wobei das Koazervat eine zusammenhängende Phase ist, in der die Lösung und die Mikrokapseln dispergiert sind.

8. Mit Gewinde versehene Befestigungseinrichtung nach Anspruch 7, bei der das hydrophobe Härtungsmittel Methylendianilin ist und das wasserlösliche Polymer Polyvinylalkohol ist.

## Revendications

1. Système adhésif époxyde à base d'eau comprenant: un produit de coacervation d'un polymère soluble dans l'eau, une solution d'un agent de polymérisation hydrophobe et des microcapsules contenant une résine époxyde, ledit produit de coacervation étant une phase contenue dans laquelle sont dispersées ladite solution et lesdites microcapsules.

2. Système adhésif époxyde à base d'eau suivant la revendication 1 dans lequel ledit système comprend de plus un liant.

3. Système adhésif époxyde à base d'eau suivant l'une quelconque des revendications 1 ou 2 dans lequel l'agent de polymérisation hydrophobe est un. dianiline de méthylène.

4. Système adhésif époxyde à base d'eau suivant la revendication 2, ou les revendications 2 et 3 dans lequel ledit liant comprend un alcool polyvinylique et une gomme de xanthine.

5. Système adhésif époxyde à base d'eau suivant l'une quelconque des revendications précédentes dans lequel lesdites microcapsules présentent des dimensions de 50 à 150 microns.

6. Système adhésif époxyde à base d'eau suivant l'une quelconque des revendications précédentes dans lequel lesdites microcapsules sont formées par une polymérisation interfaciale d'une résine urée-formaldéhyde de résorcine.

7. Attache à pas de vis comprenant une surface à pas de vis recouverte d'un système adhésif époxyde, ledit système comprenant un produit de coacervation de polymère soluble dans l'eau, une solution d'un agent de polymérisation hydrophobe et des microcapsules contenant une résine époxyde, lesdits produits de coacervation étant une phase contenue dans laquelle sont dispersées ladite solution et lesdites microcapsules.

8. Attache à pas de vis selon la revendication 7 dans laquelle ledit agent de polymérisation hydrophobe est un dianiline et le polymère soluble dans l'eau est un alcool polyvinilique.